# EUROPEAN PATENT APPLICATION

(11) **EP 1 416 708 A1**
(43) Date of publication of application: **06.05.2004**
(21) Application number: 03024562.5
(22) Date of filing: 27.10.2003
(51) Int. Cl.: H04N 1/00, H04N 5/30, H04N 5/32

(54) **Method and apparatus for image readout**

(30) Priority: 28.10.2002 JP 2002312638; 28.10.2002 JP 2002312639
(71) Applicant: Fuji Photo Film Co., Ltd., Kanagawa-ken (JP)
(72) Inventor: Shoji, Takashi Fuji Photo Film Co., Ltd., Ashigarakami-gun Kanagawa-ken (JP)
(74) Representative: Klunker . Schmitt-Nilson . Hirsch

(57) **Abstract**

Changing pixel density in the longitudinal direction of stripe electrodes (a sub-scanning direction) is enabled in a method and apparatus for reading out images from an optical readout type solid state detector equipped with stripe electrodes. A sampling rate of an image signal obtaining means is kept fixed. A readout light scanning means irradiates readout light onto the solid state detector. A pixel density changing means changes a scanning speed of the readout light in the longitudinal direction of the stripe electrodes (the sub-scanning direction), corresponding to the pixel density to be read out.

## Description

### BACKGROUND OF THE INVENTION

### Field of the Invention

The present invention relates to a method and apparatus for image readout that employ a solid state detector, which generates electric current corresponding to an electrostatic latent image recorded therein, when scanned with readout light.

### Description of the Related Art

There are known conventional apparatuses that employ solid state detectors. Examples include facsimile machines, copy machines, and radiation image obtaining apparatuses.

For example, regarding medical X-ray imaging, a system is known in which a solid state detector comprising a photoconductor such as a selenium plate formed of a-Se (amorphous selenium), which responds to X-rays, is utilized. The selenium plate is selected to reduce the amount of radiation received by a subject, and to improve diagnostic performance. In this system, X-rays bearing image data are irradiated onto the solid state detector as recording light. Latent image charges representing the image data are accumulated in a charge accumulating portion of the solid state detector. Thereafter, readout electromagnetic waves (hereinafter, referred to as "readout light") such as laser beams scan the solid state detector. Electric current generated within the solid state detector due to the scan is detected via planar electrodes or stripe electrodes provided on both sides of the solid state detector. Thereby, an electrostatic latent image represented by the latent image charges, that is, the recorded image data, is read out.

Here, the processes for recording and reading out image data to and from the solid state detector differ according to a layer structure thereof. For example, there are solid state detectors comprising: electrodes at both ends; and a recording light photoconductive layer and a readout light photoconductive layer disposed between the electrodes. In the case that this type of solid state detector is utilized, recording and readout of image data is performed in the following manner. Recording light is irradiated onto the recording light photoconductive layer in a state in which a recording voltage is applied to the electrodes at both ends, thereby forming an electrostatic latent image in a charge accumulating portion of the solid state detector. Then, the electrodes at both ends of the solid state detector are shorted to be of the same electrical potential. Further, the readout light photoconductive layer is scanned with readout light, through one of the electrodes, which is transmissive with respect to the readout light (hereinafter, referred to as "readout light side electrode"). Pairs of electrons and holes (charge pairs) are generated at the interface between the readout light side electrode and the readout light photoconductive layer. Electric current is generated by photoinductive discharge of the charge pairs. The electric current is converted to voltage signals, to perform electrical readout of the electrostatic latent image. In this case, during readout of the electrostatic latent image, current does not flow at portions onto which the recording light was not irradiated. Larger currents flow at portions onto which the intensity of recording light irradiated was high. Note that systems, in which readout is performed after shorting the electrodes at both ends of the solid state detector in the manner described above, are referred to as "short readout systems". In addition, systems, in which larger currents flow at portions onto which the intensity of recording light irradiated is high, are referred to as "positive type systems".

As a specific example of a layer structure of a solid state detector to be utilized in the short readout, positive type system described above, there is that disclosed in U.S. Patent No. 4,535,468. The solid state detector disclosed in U.S. Patent No. 4,535,468 comprises: a first conductive layer (recording light side electrode layer; the same applies hereinafter); a recording light photoconductive layer; a trap layer that functions as a charge accumulating portion; a readout light photoconductive layer; and a second conductive layer (readout light side electrode layer; the same applies hereinafter), stacked in the order listed.

In addition, there have been disclosed positive type solid state detectors having a different layer structure in U.S. Patent No. 6,268,614 and Japanese Unexamined Patent Publication No. 2000-284056. The solid state detectors disclosed in U. S. Patent No. 6, 268, 614 and Japanese Unexamined Patent Publication No. 2000-284056 comprise: a first conductive layer having transmissivity with respect to recording radiation; a recording light photoconductive layer that exhibits photoconductivity when irradiated with the recording radiation; a charge transport layer that functions substantially as an insulator with respect to charges of the same polarity as those charged in the first conductive layer, while functioning substantially as a conductor with respect to charges of the reverse polarity; a readout light photoconductive layer that exhibits photoconductivity when irradiated with readout light; and a second conductive layer having transmissivity with respect to the readout light, stacked in this order, wherein a charge accumulating portion is formed at an interface between the recording light conductive layer and the charge transport layer.

It is often the case, when radiation images are read out utilizing solid state detectors, that various image sizes are employed, depending on the imaged portion or the imaging method.

In order to change the image size, it is common to change the total number of pixels, while keeping the size of a detected region corresponding to one pixel (hereinafter, referred to as "pixel size"), which is determined by an arrangement pitch of the stripe electrodes of the solid state detector, constant. That is, the image size is changed by changing the pixel density.

Meanwhile, apparatuses that reproduce radiation images based on the image signals read out from the solid state detectors, and filing apparatuses that store radiation images, commonly have a constant reproducible or storable number of pixels. Even in the case that the number of pixels is variable, generally, their widths are small.

For this reason, in the case that readout processes are performed on detectors of different sizes, the readout density of the detector is kept constant. Regarding the image signal to be handled thereafter, it is necessary to make the pixel density coarser as the image size is larger, thereby making the number of pixels in the reproduced or stored image constant or close to it, regardless of the size of the detector. Therefore, a necessity arises to change the pixel density of the image based on the read out image signal, output from the detector, according to the required image size.

Built-in-type systems, in which a detector is fixedly provided within an apparatus, it is common to provide a detector for the largest image size. When obtaining an image of a smaller size than the largest image size, a so called "logical reading" method is employed. Logical reading is a method wherein only image data within the specified readout image size is treated as effective image data. In the case that logical reading is performed, it is also necessary to change the pixel density of the image based on the read out image signal, output from the detector, according to the required image size, as described above.

Regarding the optical readout type of solid state detector provided with stripe electrodes as disclosed in the aforementioned U.S. Patent No. 6,268,614 and Japanese Unexamined Patent Publication No. 2000-284056, pixel density conversion is possible in the arrangement direction of the stripe electrodes (main scanning direction) by applying the image readout method and apparatus proposed in U.S. Patent Laid-Open No. 20030015664. However, no method or apparatus that enables pixel density conversion in the longitudinal direction of the stripe electrodes (sub-scanning direction) has been disclosed to date.

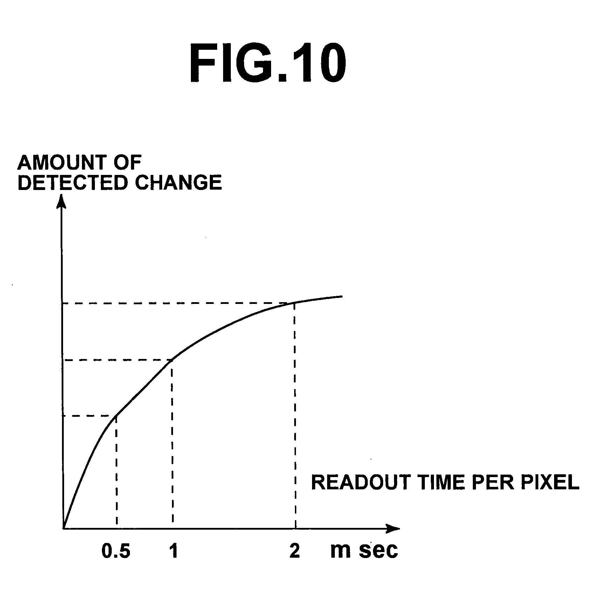

In addition, regarding solid state detectors provided with readout light photoconductive layers, as disclosed in the aforementioned U.S. Patent 4,535,468 and U.S. Patent No. 6,268,614 and Japanese Unexamined Patent Publication No. 2000-284056, amorphous substances, such as amorphous selenium, is commonly employed as a favorable material for the readout light photoconductive layer. However, amorphous substances have extremely slow charge transport speeds when compared to crystal materials. Therefore, as indicated by the graph of Figure 10, the response of charge detection with respect to irradiation by readout light is not favorable. Therefore, in the case that the scanning speed of the readout light is increased (high speed readout mode), high speed readout is enabled, but images having a favorable image quality are not obtainable, because the amount of detected charges decreases. Conversely, in the case that the scanning speed of the readout light is decreased (high image quality mode), images having a favorable image quality are obtained due to an increase in the amount of detected charges, but readout takes time.

For this reason, regarding image obtaining methods and apparatuses that employ solid state detectors equipped with readout light photoconductive layers formed from amorphous substances, it is desirable to enable selection between the high speed readout mode and the high image quality mode as necessary. However, no method or apparatus that enabled selection between the high speed readout mode and the high image quality mode has been disclosed to date.

### SUMMARY OF THE INVENTION

The present invention has been developed in view of the circumstances described above. It is the first object of the present invention to provide a method and apparatus for reading out an image from an optical readout type solid state detector equipped with stripe electrodes that enable pixel density conversion in the longitudinal direction of the stripe electrodes (sub-scanning direction). The second object of the present invention is to provide a method and apparatus for reading out an image from a solid state detector equipped with a readout light photoconductive layer formed from an amorphous substance that enables selective utilization of a high speed readout mode and a high image quality mode.

The first image readout method according to the present invention comprises the steps of:
scanning a solid state detector comprising: a first conductive layer; at least one photoconductive layer; and a second electrode layer having stripe electrodes formed by a plurality of linear electrodes, stacked in the order listed, which records image data as an electrostatic latent image when irradiated with recording light bearing the image data, and generates electric current corresponding to the electrostatic latent image when scanned with readout light, with the readout light;
detecting the electric current output from the linear electrodes by the scanning; and
obtaining an image signal by sampling the detected electric current at a predetermined sampling rate; wherein
a pixel density of an image formed by the image signal, in the longitudinal direction of the linear electrodes, is changed by changing the scanning speed of the readout light and/or the sampling rate.

Regarding the image readout method described above, it is preferable that a beam width of the readout light, in the longitudinal direction of the linear electrodes, is changed according to the pixel density in the longitudinal direction of the linear electrodes.

In addition, it is preferable that a pixel density of the image, in a direction perpendicular to the longitudinal direction of the linear electrodes, is changed by adding the electric current detected for each of the linear electrodes in an analog manner, according to the pixel density in the longitudinal direction of the linear electrodes.

Here, "a pixel density of the image, in a direction perpendicular to the longitudinal direction of the linear electrodes, is changed by adding the electric current detected for each of the linear electrodes in an analog manner" refers to a process by which the pixel density is increased or decreased. The pixel density may be increased by: deriving image signals corresponding to new pixels between adjacent existing pixels, which are based on image signals output from each linear electrode; thereby obtaining image signals corresponding to pixels of a smaller size than the pixel size which is determined by the arrangement pitch of the linear electrodes. The pixel density may be decreased by: adding a plurality of image signals output from each linear electrode, which correspond to adjacent pixels, to obtain a new image signal corresponding to a single pixel; thereby obtaining new image signals corresponding to pixels of a larger size than the pixel size which is determined by the arrangement pitch of the linear electrodes.

Note that regarding the pixel density changing process described above, the new image signals may be obtained after weighting each of the plurality of pixels. Any weighting coefficients may be utilized. For example, the same weighting coefficient may be utilized for all of the pixels (corresponding to a simple average). Alternatively, different weighting coefficients may be utilized for each pixel (corresponding to a weighted average).

The second image readout method according to the present invention comprises the steps of:
scanning a solid state detector comprising: a first conductive layer which is transmissive with respect to recording light; a recording light photoconductive layer which exhibits photoconductivity when irradiated with the recording light; a charge accumulating layer that stores image data borne by the recording light as an electrostatic latent image; a readout light photoconductive layer formed from an amorphous substance which exhibits photoconductivity when irradiated with readout light; and a second conductive layer having stripe electrodes formed by a plurality of linear electrodes, stacked in the order listed, which generates electric current corresponding to the electrostatic latent image when scanned with the readout light, with the readout light;
detecting the electric current output from each of the linear electrodes with a current detecting means; and
obtaining an image signal by sampling the electric current, detected by the current detecting means, at a predetermined sampling rate; wherein
a frequency band of the current detecting means is changed according to a readout speed of the electrostatic latent image, in the case that the readout speed is changed by changing a scanning speed of the readout light and the sampling rate in proportion with each other.

Noise of an amplifier employed as the current detecting means is proportional to the square root of the frequency band. Therefore, a frequency band higher than necessary is disadvantageous from the viewpoint of noise. In addition, repetitive noise which occurs due to suboptimal sampling is also determined by the sampling rate and the frequency band of the current detecting means (amplifier). However, in the case that the pixel size is fixed, the readout time per pixel depends on the scanning speed of the readout light and, the sampling rate becomes a function of the scanning speed of the readout light. Therefore, by changing the frequency band of the current detecting means (amplifier) according to the scanning speed of the readout light, the S/N ratio of the detected signals can be optimized, and the best image quality can be obtained for every scanning speed of the readout light.

The first image readout apparatus according to the present invention comprises:
a solid state detector comprising: a first conductive layer; at least one photoconductive layer; and a second electrode layer having stripe electrodes formed by a plurality of linear electrodes, stacked in the order listed, which records image data as an electrostatic latent image when irradiated with recording light bearing the image data, and generates electric current corresponding to the electrostatic latent image when scanned with readout light, with the readout light;
a readout light scanning means for scanning the solid state detector with the readout light;
a current detecting means for detecting the electric current output from each of the linear electrodes by the scanning with the readout light;
an image signal obtaining means for obtaining an image signal by sampling the detected electric current at a predetermined sampling rate; and
a pixel density changing means for changing a pixel density of an image formed by the image signal, in the longitudinal direction of the linear electrodes, by changing the scanning speed of the readout light and/or the sampling rate.

Regarding the first image readout apparatus described above, it is preferable that the apparatus further comprise a beam width changing means for changing a beam width of the readout light in the longitudinal direction of the linear electrodes.

In addition, it is preferable that the apparatus further comprise an adding means for adding the electric current detected from each of the linear electrodes in an analog manner.

The second image readout apparatus according to the present invention comprises:
a solid state detector comprising: a first conductive layer which is transmissive with respect to recording light; a recording light photoconductive layer which exhibits photoconductivity when irradiated with the recording light; a charge accumulating layer that stores image data borne by the recording light as an electrostatic latent image; a readout light photoconductive layer formed from an amorphous substance which exhibits photoconductivity when irradiated with readout light; and a second conductive layer having stripe electrodes formed by a plurality of linear electrodes, stacked in the order listed, which generates electric current corresponding to the electrostatic latent image when scanned with the readout light, with the readout light;
a readout light scanning means for scanning the solid state detector with the readout light;
a current detecting means for detecting the electric current output from each of the linear electrodes by the scanning with the readout light;
an image signal obtaining means for obtaining an image signal by sampling the electric current, detected by the current detecting means, at a predetermined sampling rate; and
a readout speed changing means for changing the readout speed of the electrostatic latent image by changing the scanning speed of the readout light scanning means and the sampling rate in proportion with each other.
Regarding the second image readout apparatus described above, it is preferable that the apparatus further comprise a frequency band changing means for changing a frequency band of the current detecting means.

According to the first image readout method and the first image readout apparatus of the present invention, pixel density conversion is enabled in the longitudinal direction of stripe electrodes, when reading out images from an optical readout type solid state detector equipped with stripe electrodes. Therefore, a pixel number of an image to be handled by image processing at a later step can be made into a desired value, regardless of an effective image size of the solid state detector. Accordingly, common image reproducing apparatuses and filing apparatuses may be used for detectors of different sizes, or for read out images of different sizes as a result of logical reading.

In addition, according to the second image readout method and the second image readout apparatus of the present invention, the readout speed of the electrostatic latent image is variable, by changing the scanning speed of the readout light scanning means and the sampling rate in proportion to each other. Thereby, a high speed readout mode and a high image quality mode are enabled to be selectively utilized.

Further, by changing the frequency band of the current detecting means (amplifier) according to the scanning speed of the readout light, the S/N ratio of the detected signal is optimized. Thereby, the best image quality can be obtained for every scanning speed of the readout light.

### BRIEF DESCRIPTION OF THE DRAWINGS

Figure 1 is a block diagram of an image readout apparatus according to a first embodiment of the present invention.
Figure 2 is a schematic view of a solid state detector and a readout light scanning means of the image readout apparatus of the first embodiment.
Figure 3A is a side view showing the detailed structure of a light source of the readout light scanning means, taken from the direction of the Y axis.
Figure 3B is a sectional view of the light source taken along the X-Y plane.
Figure 4 is a schematic view showing the solid state detector, a current detecting means, an adding means, and an image signal obtaining means of the image readout apparatus according to the first embodiment.
Figure 5A, Figure 5B, and Figure 5C show schematic views of a solid state detector and a current detecting means of an image readout apparatus according to the second embodiment.

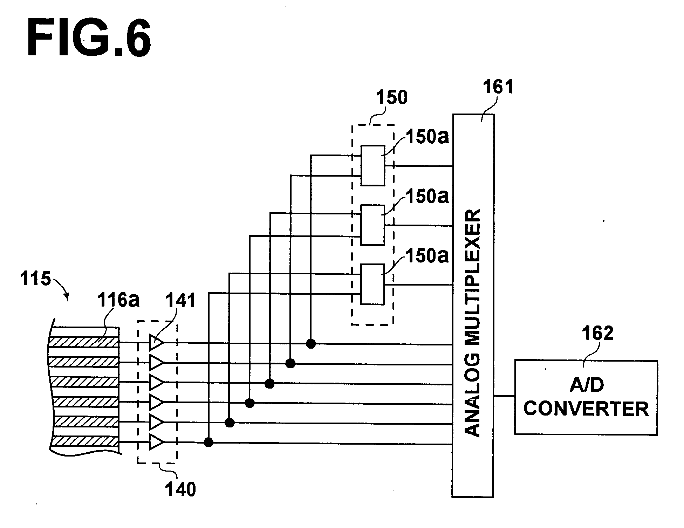

Figure 6 is a schematic view showing the solid state detector, the current detecting means, an adding means, and an image signal obtaining means of the image readout apparatus according to the second embodiment.
Figure 7 is a block diagram of an image readout apparatus of a third embodiment.
Figure 8 is a schematic view of a solid state detector, a current detecting means, and an image signal obtaining means of the image readout apparatus according to the third embodiment.
Figure 9 is a schematic view of a solid state detector, a current detecting means, and an image signal obtaining means of an image readout apparatus of a fourth embodiment.
Figure 10 is a graph that shows the relationship between readout time per pixel and an amount of detected charges.

### DESCRIPTION OF THE PREFERRED EMBODIMENTS

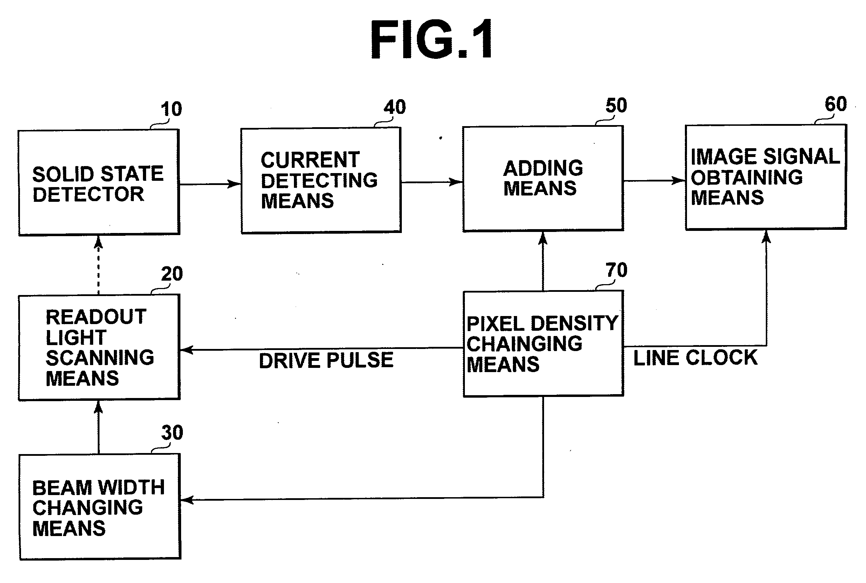

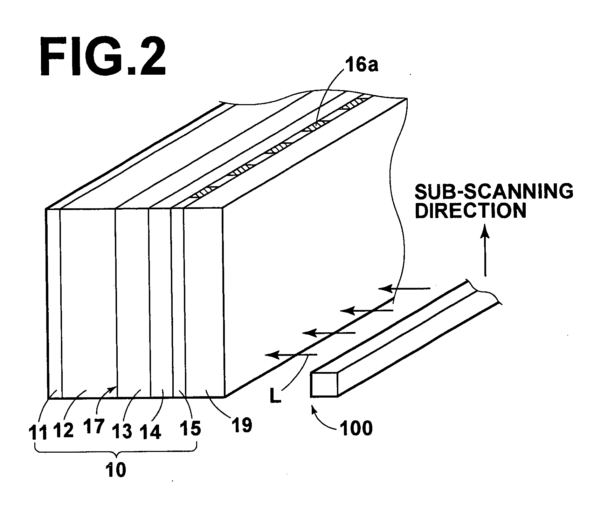

Hereinafter, embodiments of the present invention will be described in detail with reference to the attached drawings. Figure 1 is a block diagram of an image readout apparatus according to a first embodiment of the present invention. Figure 2 is a schematic view of a solid state detector and a readout light scanning means of the image readout apparatus of Figure 1.

As shown in Figure 1 and Figure 2, the image readout apparatus 1 comprises: a solid state radiation detector 10 (hereinafter, simply referred to as "detector") which serves as an image detector; a readout light scanning means 20 for scanning the detector 10 with readout light; a beam width changing means 30 for changing a beam width of a beam emitted from a light source of the readout light scanning means 20; a current detecting means 40 for detecting electric currents output from the detector 10; an adding means 50 for changing a pixel density in a main scanning direction by adding signals input thereto from the current detecting means 40; an image signal obtaining means 60 for obtaining image signals by sampling the electric current detected by the current detecting means 40 at a predetermined sampling rate; and a pixel density changing means 70 for controlling the readout light scanning means 20, the beam width changing means 30, the adding means 50 and the image signal obtaining means 60 to change the pixel density of the image signal obtained from the detector 10.

The detector 10 records image data as an electrostatic latent image, and generates electric current according to the electrostatic latent image when scanned with readout light. The detector 10 comprises: a first conductive layer 11, which is transmissive with respect to recording light; a recording light photoconductive layer 12 which generates charges when irradiated with the recording light and exhibits conductivity; a charge transport layer 13 which operates substantially as an insulator with respect to charges having a latent image polarity, charged in the first conductive layer 11, and operates substantially as a conductor with respect to charges having a polarity opposite from the latent image polarity; a readout light photoconductive layer 14 which generates charges when irradiated with the readout light and exhibits conductivity; and a second conductive layer 15, which is transmissive with respect to the readout light, stacked in the order listed. A charge accumulating portion 17 is formed at the interface of the recording light photoconductive layer 12 and the charge transport layer 13. Au having a thickness of 1µm is employed as the first conductive layer 11; a-Se having a thickness of 1µm is employed as the recording light photoconductive layer 12; As₂Se₃ having a thickness of 0.1µm is employed as the charge transport layer 13; and a-Se having a thickness of 2µm is employed as the readout light photoconductive layer 14. A great number of linear electrodes (the hatched portion in the figure) formed by IZO (Indium Zinc Oxide) having a thickness of 0.2µm and a width of 25µm, arranged in stripes, are employed as the second conductive layer 15, which functions as a readout electrode layer. Hereinafter, the electrodes of the second conductive layer 15 will be referred to as stripe electrodes 16, and each linear electrode will be referred to as element 16a. The detector 10 is formed on a glass substrate 19.

The pixel density changing means 70 comprises: a readout light scanning means clock, for outputting a clock signal to the readout light scanning means 20; an image signal obtaining means clock, for outputting a clock signal to the image signal obtaining means 60; and a driver for controlling the two clocks, the beam width changing means 30 and the image signal obtaining means 60. Hereinafter, the clock signal output from the readout light scanning means clock will be referred to as a drive pulse, and the clock signal output from the image signal obtaining means clock will be referred to as a line clock.

In the present embodiment, the image signal obtaining means clock is configured to output a 1 kHz line clock. The readout light scanning means clock is configured to output drive pulses at three pulse rates, based on commands from the driver. The pulse rates are: 1 kHz in the case of high pixel density readout (pixel size: 50µm); 2 kHz in the case of medium pixel density readout (pixel size: 100µm); and 3 kHz in the case of low pixel density readout (pixel size: 150µm). The pulse rates are varied by the readout light scanning means clock changing a division ratio of a crystal transducer therein.

The line clock determines the sampling rate, and the drive pulse determines the scanning speed of the readout light. The pixel density may be changed by fixing the sampling rate and varying the scanning speed of the readout light.

Regarding the pixel density settings described above, for example, in the case that a mammogram image is read out, high resolution is necessary to detect micro-calcifications. Therefore, it is preferable to read out the mammogram image with a high pixel density. In the case that a skeletal image is read out, resolution of a level that enables observation of bone structures and breakage thereof is necessary. Therefore, it is preferable that the skeletal image is read out with a medium pixel density or higher. In the case that a chest x-ray is read out, it is necessary that favorable graininess is obtained. Therefore, it is preferable that the chest x-ray is read out with a low pixel density.

The readout light scanning means 20 is constructed by a light source 100 and a readout light scanning linear motor. The light source 100 comprises: a linear light source 101, constructed by a plurality of LED chips arranged in a single line; and an optical system for linearly irradiating the detector 10 with the light output from the linear light source 101. The readout light scanning linear motor moves the light source 100 parallel with respect to the detector 10, while maintaining a necessary distance therebetween. The readout light scanning means 20 is configured to scan the entire surface of the detector 10 with the readout light, by moving the light source 100, which irradiates linear light in a direction corresponding to a main scanning direction, parallel with respect to the detector 10 in a sub-scanning direction by the readout light scanning linear motor. The readout light scanning linear motor is driven synchronously with the drive pulse. The readout light scanning linear motor moves the light source 100 50µm in the sub-scanning direction every time it receives one drive pulse.

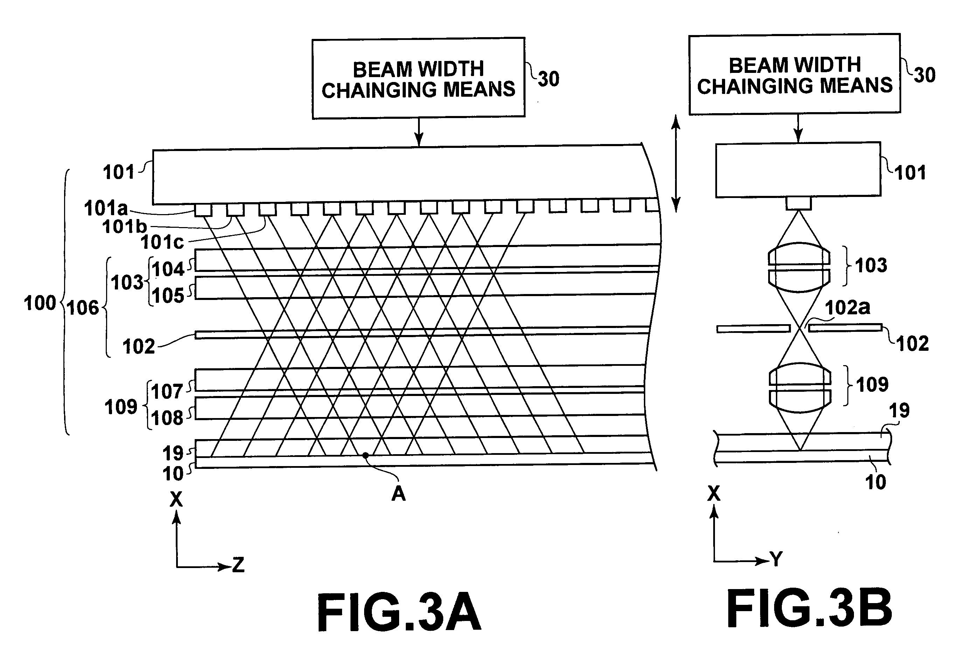

A specific example of the light source 100 of the readout light scanning means 20 is shown in Figure 3A and Figure 3B. The structure and operation of the light source 100 will be described with reference to Figure 3A and Figure 3B. Figure 3A is a side view showing the detailed structure of the light source 100 taken from the Y direction. Figure 3B is a sectional view of the light source 100 taken along the X-Y plane.

As shown in Figure 3A and Figure 3B, the light source 100 comprises: the linear light source 101; a first optical system 106; and a second optical system 109. The linear light source 101 comprises a plurality of LED chips 101a, 101b, 101c... arranged in a line in the direction of the Z axis. The first optical system 106 comprises a slit plate 102 and cylindrical lenses 104 and 105. The slit plate 102 is provided with a slit 102a, which extends in the longitudinal direction of the linear light source 101, for improving the quality of the light emitted therefrom. The cylindrical lenses 104 and 105 function as an optical member 103 for focusing light at the slit 102a. The second optical system comprises cylindrical lenses 107 and 108, for focusing the light which has passed through the first optical system on the surface of the detector 10, in the direction perpendicular to the longitudinal direction of the linear light source 101.

The slit 102a spatially filters the light output from the linear light source 101 to suppress flare light, and determines the beam diameter thereof on the detector 10. Note that the slit plate 102 maybe of any construction as long as it suppresses spatial spread of light. The slit 102a is not limited to an opening as in the present embodiment, and may be an optical element such as a density distribution filter.

The light output from each light emitting point, that is, each LED chip 101a, 101b, 101c... of the linear light source 101 is focused at the slit 102a by the cylindrical lenses 104 and 105. The light is filtered at the slit 102a, then focused in the direction perpendicular to the longitudinal direction of the linear light source 101 by the cylindrical lenses 107 and 108. The thus focused light is irradiated onto the detector 10. The light beam emitted from each LED chip diffuses by spreading in an isotropic manner. Because the light beam is not focused in the longitudinal direction of the linear light source 101, the light from the linear light source 101 spreads in the longitudinal direction thereof. Therefore, light from each LED chip irradiates the detector 10 in a linear manner, and simultaneously irradiates a plurality of pixels which are aligned thereon. That is, each pixel of the detector 10 is simultaneously exposed by light emitted from a plurality of LED chips. For example, although Figure 3A is a model drawing, a point A indicated therein is simultaneously exposed by light from seven LED chips.

Note that regarding the light source 100 described above, SELFOC lenses may be employed instead of the cylindrical lenses 104 and 105 of the first optical system 106. In addition, although the linear light source 101 is constituted by a plurality of aligned LED chips, a construction may be adopted wherein a plurality of Laser Diode (LD) chips may be aligned. Further, an LED array or an LD array, which are formed with a plurality of aligned light emitting points, may be employed as the linear light source.

The beam width changing means 30 is connected to the linear light source 101 of the light source 100. The beam width changing means is constituted by a beam width changing linear motor. The beam width changing linear motor moves the linear light source toward and away from the optical systems of the readout light scanning means 20. Note that regarding the light source 100, when the linear light source 101 is moved to focus the light beam on the detector 10, the beam width of the light beam irradiated thereon is narrowed; and when the linear light source 101 is moved to shift the focus of the light beam on the detector 10, the beam with of the light beam irradiated thereon is widened.

When scanning the detector 10 with the readout light, it is preferable to set the beam width wide during high speed scanning, and to set to beam width narrow during low speed scanning. This is to secure sufficient discharge time within the readout light photoconductive layer 14. That is, complete discharge does not occur at a desired point unless a certain amount of irradiation time is secured thereat. In order to accomplish this end, the beam width changing linear motor moves the linear light source 101 based on commands from the driver of the pixel density changing means 70, thereby changing the beam width of the light beam irradiated on the detector 10.

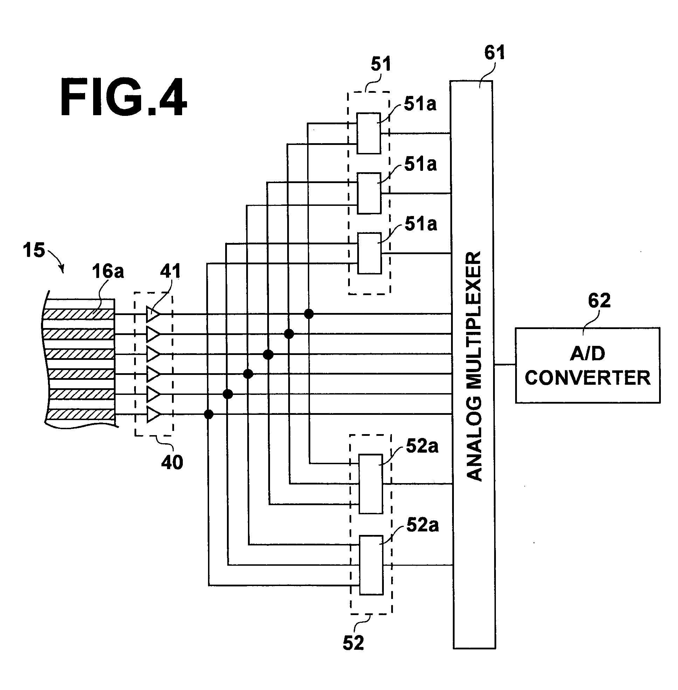

Figure 4 is a schematic view showing the detector, the current detecting means, the adding means, and the image signal obtaining means of the image readout apparatus according to the present embodiment.

The current detecting means 40 comprises a plurality of current detecting amplifiers 41, each of which is connected to an inverted input terminal, corresponding to each element 16a of the stripe electrodes 16.

The adding means 50 comprises a medium pixel density adding portion 51 and a low pixel density adding portion 52. The medium pixel density adding portion 51 comprises a plurality of analog adders 51a for adding the outputs of every adjacent pair of elements 16a. The low pixel density adding portion 52 comprises a plurality if analog adders 52a for adding the outputs of every group of three adjacent elements 16a.

The image signal obtaining means 60 comprises an analog multiplexer 61 and an A/D converter 62 for A/D converting signals output from the analog multiplexer. Signals are input to the analog multiplexer 61 from: each current detecting amplifier 41, connected to each element 16a; the medium pixel density adding portion 51; or the low pixel density adding portion 52. The analog multiplexer 61 sequentially outputs the signals input thereto in the order that the elements 16a are arranged, every time that a line clock pulse is received, based on commands from the driver of the pixel density changing means 70.

Next, the operation of the image readout apparatus 1 having the above construction will be described.

When an electrostatic latent image is to be recorded in the detector 10, first, a high voltage power source (not shown) is connected to thereto. DC voltage is applied between the first conductive layer 11 and each of the elements 16a, to charge them. Thereby, U-shaped electrical fields, with the elements 16a located at the bottoms thereof, are formed between the first conductive layer 11 and each of the elements 16a.

When recording light bearing image data is irradiated onto the detector 10, positive-negative charge pairs are generated within the recording light photoconductive layer 12. Of the charge pairs, negative charges are concentrated at the elements 16a along the aforementioned electrical field distribution, and the negative charges are accumulated at the charge accumulating portion 17, which is formed at the interface between the recording light photoconductive layer 12 and the charge transport layer 13. The accumulated negative charges, that is, the amount of charges having a latent image polarity, is substantially proportional to the amount of radiation which has passed through a subject. Therefore, the charges having the latent image polarity bear the electrostatic latent image. In this manner, the electrostatic latent image is recorded in the detector 10. Meanwhile, positive charges generated within the recording light photoconductive layer 12 are drawn toward the first conductive layer 11, are coupled with negative charges supplied by the high voltage power source, and disappear.

Next, the operations for reading out the electrostatic latent image from the detector 10 will be described.

First, a readout initiating signal, which includes data regarding the level of readout pixel density, is input to the driver of the pixel density changing means 70. Upon input of the signal, the driver shorts the first conductive layer 11 and each element 16a of the detector 10. Then, the driver causes the readout light scanning means clock to output a drive pulse corresponding to the input readout pixel density level, and causes the image signal obtaining means clock to output a line clock (1 kHz).

In the present description, it is assumed that a command for medium pixel density readout has been input. Therefore, the driver causes the readout light scanning means clock to output a drive pulse having a pulse rate of 2 kHz. In addition, the beam width changing linear motor is driven to change the beam width of the light beam irradiated by the light source 100 to a predetermined beam width corresponding to readout at a medium pixel density.

The readout light scanning linear motor moves the light source 100 50µm per each received drive pulse, to scan the entire surface of the detector 10. As a clock signal is output having twice the frequency of the timing for obtaining the image signal, the size of each pixel becomes 100µm.

When the above-described scanning is performed, positive-negative charge pairs are generated within the readout light photoconductive layer 14. Of the charge pairs, positive charges are drawn toward the negative charges (charges having the latent image polarity) accumulated at the charge accumulating portion 17. The positive charges move at high speed through the charge transport layer 13, are coupled with the charges having the latent image polarity at the charge accumulating portion 17, and disappear. Meanwhile, the negative charges generated in the readout light photoconductive layer 14 couple with positive charges supplied to the second conductive layer 15, and disappear. In this manner, the negative charges accumulated in the detector 10 disappear by charge coupling, and electric current is generated within the detector 10 due to the movement of charges during the charge coupling.

The electric current is detected by the current detecting amplifiers 41 connected to each of the elements 16a in parallel (simultaneously) , and is output to the analog multiplexer 61, the medium pixel density adding portion 51 and the low pixel density adding portion 52.

The signals input to the medium pixel density adding portion are added for every adjacent pair of elements 16a, and output to the analog multiplexer 61. Similarly, the signals input to the low pixel density adding portion 52 are added for every group of three adjacent elements 16a, and output to the analog multiplexer 61.

The analog multiplexer 61 sequentially outputs the signals input thereto from the medium pixel density adding portion 51 in the order that the elements 16a are arranged, every time that a line clock pulse is received, based on commands from the driver of the pixel density changing means 70. The signals output from the analog multiplexer 61 are sampled by the A/D converter 62 and converted to digital signals, thereby obtaining an image signal corresponding to a pixel in the sub-scanning direction.

The electric current that flows within the detector 10 accompanying the scanning by the readout light corresponds to the charges having the latent image polarity, that is, the electrostatic latent image. Therefore, the image signals obtained by detecting the electric current represent the electrostatic latent image. Thus, the electrostatic latent image is read out.

According to the image readout apparatus having the construction described above, pixel density conversion is enabled not only in the arrangement direction of the elements 16a (the main scanning direction) , but also in the longitudinal direction thereof (the sub-scanning direction).

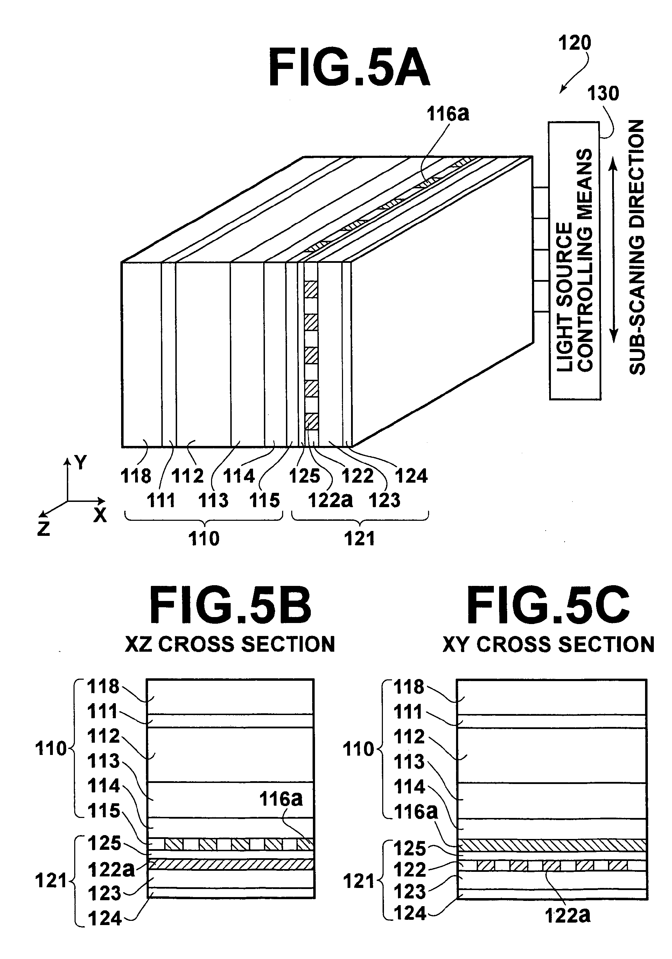

Next, an image readout apparatus according to a second embodiment of the present invention will be described. The image readout apparatus of the second embodiment differs from that of the first embodiment mainly in that the solid state detector and the readout light scanning means are changed. Figure 5A, Figure 5B, and Figure 5C show schematic views of the detector and the current detecting means of the image readout apparatus according to the second embodiment. Note that a block diagram of the image readout apparatus according to the second embodiment is omitted, because it is the same as that of the first embodiment. In addition, the reference numerals for each component in Figure 5A, Figure 5B and Figure 5C are those of the components in the first embodiment, with 100 added thereto.

The solid state detector 110 (hereinafter, referred to as "detector") of the present embodiment records image data as an electrostatic latent image, and generates electric current according to the electrostatic latent image when scanned with readout light. The detector 110 comprises: a scintillator 118 for converting radiation irradiated thereon to a visible light having a wavelength of 550nm, that is, recording light; a first conductive layer 111, which is transmissive with respect to recording light; a recording light photoconductive layer 112 which generates charges when irradiated with the recording light and exhibits conductivity; a charge transport layer 113 which operates substantially as an insulator with respect to charges having a latent image polarity, charged in the first conductive layer 111, and operates substantially as a conductor with respect to charges having a polarity opposite from the latent image polarity; a readout light photoconductive layer 114 which generates charges when irradiated with the readout light and exhibits conductivity; and a second conductive layer 115, which is transmissive with respect to the readout light, stacked in the order listed. A charge accumulating portion 117 is formed at the interface of the recording light photoconductive layer 112 and the charge transport layer 113. Gd₂O₂S₃ having a thickness of 0.1µm is employed as the scintillator 118; Au having a thickness of 0.1µm is employed as the first conductive layer 111; a-Se having a thickness of 1µm is employed as the recording light photoconductive layer 112; Sb₂S₃ having a thickness of 0.1µm is employed as the charge transport layer 113; and a-Se having a thickness of 2µm is employed as the readout light photoconductive layer 114. A great number of linear electrodes (the hatched portion in the figure) formed by IZO (Indium Zinc Oxide) having a thickness of 0.2µm and a width of 50µm, arranged in stripes at a pitch of 100µm, are employed as the second conductive layer 115, which functions as a readout electrode layer. Hereinafter, the electrodes of the second conductive layer 115 will be referred to as stripe electrodes 116, and each linear electrode will be referred to as element 116a.

A pixel density changing means 170 comprises: a clock for outputting clock signals to a light source controlling means 130 of a readout light scanning means 120 and to an image signal obtaining means 160; and a driver for controlling the clock, the light source controlling means 130, and the image signal obtaining means 160. Hereinafter, the clock signals output from the clock to the readout light scanning means 120 will be referred to as a drive pulse, and the clock signals output from the clock to the image signal obtaining means 160 will be referred to as a line clock.

In the present embodiment, the clock is configured to output clock signals at a frequency of 1 kHz.

The readout light scanning means 120 comprises a planar light source 121 and the light source controlling means 130 for controlling the planar light source 121.

The planar light source 121 is an electroluminescent (EL) light source comprising a conductive layer 122, an EL layer 123, and a conductive layer 124. The EL layer 123 may be formed of either an organic EL material or an inorganic EL material. An insulative layer 125 is provided between the stripe electrodes 116 of the detector 110 and the conductive layer 122. The conductive layer 122 comprises a great number of elements 122a (the hatched portions in the figure) which are arranged in stripes at a pitch of 100µm. Each of the elements 122a are arranged to intersect each of the elements 116a of the stripe electrodes 116 of the detector 110. Thereby, a great number of linear light sources constituted by the elements 122a are configured to be arranged in a plane. Each of the elements 122a are connected to the light source controlling means 130.

The light source controlling means 130 applies a predetermined voltage between the elements 122a and the conductive layer 124 which faces them. During readout, voltages are applied to each element 122a individually. For example, when predetermined DC voltages are sequentially applied between each of the elements 122a and the conductive layer 124, EL light is emitted from the EL layer sandwiched between the respective element 122a and the conductive layer 124. The EL light which is transmitted through the element 122a is utilized as a linear readout light (hereinafter, referred to as "linear light"). That is, the planar light source 121 is equivalent to a light source wherein a great number of micro linear light sources are arranged in a plane. By sequentially switching the elements 122a, thereby causing EL luminescence from one end of the longitudinal direction of the stripe electrodes 116 to the other end thereof, the entire surface of the stripe electrodes 116 is electrically scanned with linear light. Note that the longitudinal direction of the elements 116a corresponds to the sub-scanning direction, and the direction in which the linear light extends corresponds to the main scanning direction.

The detector 110 and the planar light source 121 are stacked in the order listed on a glass substrate.

The light source controlling means 130 switches the elements 122a one by one simultaneously with the drive pulse during high pixel density readout, based on a command from the driver. During low pixel density readout, the elements 122a are switched two by two simultaneously with the drive pulse. That is, the light source controlling means 130 serves the function of a beam width changing means as well.

An adding means 150 comprises a plurality of analog adders 150a for adding the outputs of every adjacent pair of elements 116a.

In the image readout apparatus of the present embodiment, the pixel size in high pixel density readout is 100µm, and the pixel size in low pixel density readout is 200µm.

Regarding the pixel density settings described above, for example, in the case that a still image is to be formed from the read out image, it is preferable to read out the image with high pixel density to obtain an image with high resolution. In the case that a moving image is to be formed from the read out image, a necessary frame rate for the moving image can be secured by high speed readout at low pixel density.

The image readout apparatus according to the second embodiment described above is also capable of obtaining the same advantageous effects as that of the first embodiment.

Note that regarding the first and second embodiments, the sampling rate is fixed, and the pixel density is changed by changing the scanning speed of the readout light. However, the scanning speed of the readout light may be fixed, and the pixel density may be changed by changing the sampling rate. Alternatively, both the scanning speed of the readout light and the sampling rate may be variable, and the pixel density may be changed by varying the ratio of change thereof.

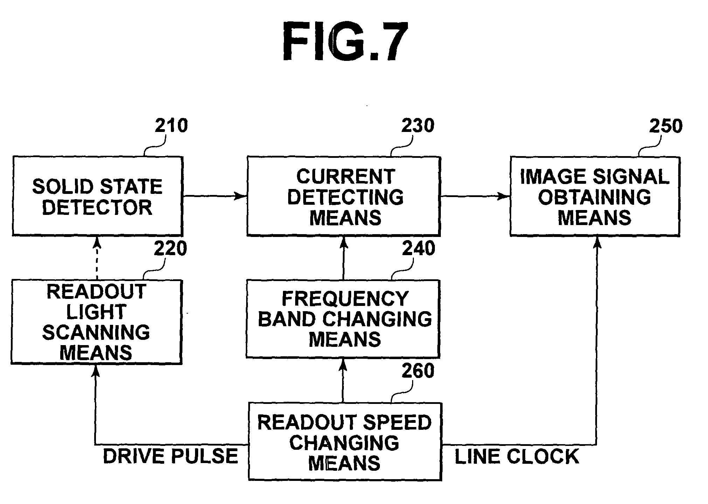

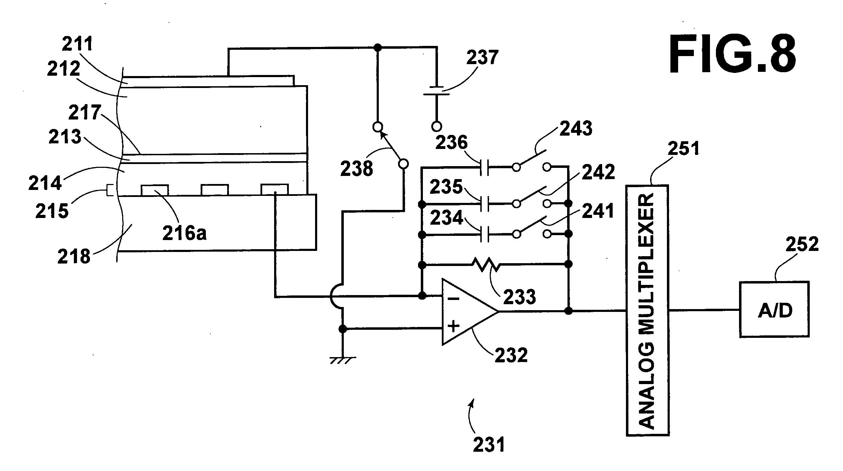

Next, an image readout apparatus according to a third embodiment of the present invention will be described. Figure 7 is a block diagram of the image readout apparatus of the third embodiment. Figure 8 is a schematic view of a solid state detector, a current detecting means, and an image signal obtaining means of the image readout apparatus.

As shown in Figure 7 and Figure 8, the image readout apparatus comprises: a solid state radiation detector 210 (hereinafter, simply referred to as "detector") which serves as an image detector; a readout light scanning means 220 for scanning the detector 210 with readout light; a current detecting means 230 for detecting electric currents output from the detector 210; a frequency band changing means 240 for changing the frequency band of the current detecting means 230; an image signal obtaining means 250 for obtaining image signals by sampling the electric current detected by the current detecting means 230 at a predetermined sampling rate; and a readout speed changing means 260 for controlling the readout light scanning means 220, the frequency band changing means 240, and the image signal obtaining means 250 to change the readout speed of an image signal obtained from the detector 10.

The detector 210 records image data as an electrostatic latent image, and generates electric current according to the electrostatic latent image when scanned with readout light. The detector 210 comprises: a first conductive layer 211, which is transmissive with respect to recording light; a recording light photoconductive layer 212 which generates charges when irradiated with the recording light and exhibits conductivity; a charge transport layer 213 which operates substantially as an insulator with respect to charges having a latent image polarity, charged in the first conductive layer 211, and operates substantially as a conductor with respect to charges having a polarity opposite from the latent image polarity; a readout light photoconductive layer 214 which generates charges when irradiated with the readout light and exhibits conductivity; and a second conductive layer 215, which is transmissive with respect to the readout light, stacked in the order listed. A charge accumulating portion 217 is formed at the interface of the recording light photoconductive layer 212 and the charge transport layer 213. Au having a thickness of 0.1µm is employed as the first conductive layer 211; a-Se having a thickness of 500µm is employed as the recording light photoconductive layer 212; As₂Se₃ having a thickness of 0.1µm is employed as the charge transport layer 213; and a-Se having a thickness of 10µm is employed as the readout light photoconductive layer 214. A great number of linear electrodes (the hatched portion in the figure) formed by IZO (Indium Zinc Oxide) having a thickness of 0.2µm and a width of 50µm, arranged in stripes at a pitch of 100µm, are employed as the second conductive layer 215, which functions as a readout electrode layer. Hereinafter, the electrodes of the second conductive layer 215 will be referred to as stripe electrodes 216, and each linear electrode will be referred to as element 216a. The detectable region of the detector 210 is set to be 430mm x 430mm. The size of a pixel is set to be 100µm in both a main scanning direction (the arrangement direction of the elements 216a) and a sub-scanning direction (the longitudinal direction of the elements 216a). That is, the detectable region is set to be 4300 pixels x 4300 pixels. The detector 210 is formed on a glass substrate 218.

The readout speed changing means 260 comprises a clock for outputting clock signals, and a driver for controlling the clock and the frequency band changing means 240. The clock is connected to the readout light scanning means 220 and the image signal obtaining means 250. The clock controls the scanning speed of the readout light by the readout light scanning means 220, as well as the sampling rate of the image signal obtaining means 250. The clock is configured to output clock signals at different frequencies by changing a division ratio of a crystal transducer therein, based on commands from the driver. Hereinafter, the clock signal output from the clock to the readout light scanning means 220 will be referred to as a drive pulse, and the clock signal output from the clock to the image signal obtaining means 250 will be referred to as a line clock. In the present embodiment, the clock is configured to output clock signals at frequencies of 2 kHz, 1 kHz, and 0.5 kHz. The clock signals output at the aforementioned three frequencies yield readout time per pixel of 0.5 ms, 1 ms, and 2 ms, respectively. Thereby, the readout time of an image from the entirety of the detector 210 can be changed among 2.15 sec in a high speed readout mode, 4.3 sec in a normal mode, and 8.6 sec in a high image quality mode.

The readout light scanning means 220 is constructed by a light source and a linear motor. The light source comprises:
a linear light source, constructed by a plurality of LED chips arranged in a single line; and an optical system for linearly irradiating the detector 210 with the light output from the linear light source 101. The linear motor moves the light source parallel with respect to the detector 210, while maintaining a necessary distance therebetween. The readout light scanning means 220 is configured to scan the entire surface of the detector 210 with the readout light, by moving the light source, which irradiates linear light in a direction corresponding to a main scanning direction, parallel with respect to the detector 210 in a sub-scanning direction by the linear motor. The readout light scanning linear motor is driven synchronously with the drive pulse. The readout light scanning linear motor moves the light source the distance of one pixel in the sub-scanning direction every time it receives one drive pulse.

The current detecting means 230 comprises: a plurality of I-V converting amplifiers 231, each of which are connected to each of the elements 216a; a high voltage power source 237, for applying voltage to the detector 210 during image recording; and a switch 238. Each I-V converting amplifier 231 comprises:
an operational amplifier 232; a resistor 233; a high speed readout mode capacitor 234; a normal mode capacitor 235; and
a high image quality mode capacitor 236; connected in parallel. The capacitors 234, 235, and 236 have mutually different electrostatic capacities.

The frequency band changing means 240 comprises: a high speed readout mode switch 241, a normal mode switch 242, and a high image quality mode switch 243. The switches 241, 242, and 243 are connected in series to the capacitors 234, 235, and 236, respectively. The switches 241, 242, and 243 are opened and closed based on commands from the driver of the readout speed changing means 260.

The frequency band of the I-V converting amplifier 231 is determined by a cutoff frequency of a low pass filter constituted by the resistor 233, and one of the high speed readout mode capacitor 234, the normal mode capacitor 235, and the high image quality mode capacitor 236.

The electrostatic capacities of the capacitors 234, 235, and 236 are set so that when combined with the resistor 233 to construct the low pass filter, the cutoff frequency thereof becomes half the sampling rates (the Nyquist frequency) of the high speed readout mode, the normal mode, and the high image quality mode, respectively.

The image signal obtaining means 250 comprises an analog multiplexer 251 for combining the outputs of each of the I-V converting amplifiers 231, and an A/D converter for A/D converting the output signals of the analog multiplexer 251. The image signal obtaining means 250 samples one pixel' s worth of image signals in the sub-scanning direction every time that it receives a line clock pulse.

Next, the operation of the image readout apparatus having the above construction will be described.

When an electrostatic latent image is to be recorded in the detector 210, first, the switch 238 connects the high voltage power source to the detector 210. DC voltage is applied between the first conductive layer 211 and each of the elements 216a, to charge them. Thereby, U-shaped electrical fields, with the elements 216a located at the bottoms thereof, are formed between the first conductive layer 211 and each of the elements 216a.

When recording light bearing image data is irradiated onto the detector 210, positive-negative charge pairs are generated within the recording light photoconductive layer 212. Of the charge pairs, negative charges are concentrated at the elements 216a along the aforementioned electrical field distribution, and the negative charges are accumulated at the charge accumulating portion 217, which is formed at the interface between the recording light photoconductive layer 212 and the charge transport layer 213. The accumulated negative charges, that is, the amount of charges having a latent image polarity, is substantially proportional to the amount of radiation which has passed through a subject. Therefore, the charges having the latent image polarity bear the electrostatic latent image. In this manner, the electrostatic latent image is recorded in the detector 210. Meanwhile, positive charges generated within the recording light photoconductive layer 212 are drawn toward the first conductive layer 211, are coupled with negative charges supplied by the high voltage power source, and disappear.

Next, the operations for reading out the electrostatic latent image from the detector 210 will be described.

First, a readout initiating signal, which includes data regarding the readout mode, is input to the driver of the readout speed changing means 260. Upon input of the signal, the driver switches the switch 238 to short the first conductive layer 211 and each element 216a of the detector 210. At the same time, the driver closes the switch corresponding to the readout mode from among the high speed readout mode switch 241, the normal mode switch 242, and the high image quality mode switch 243, thereby changing the frequency band of each I-V converting amplifier to the optimal band. Then, the driver causes the clock to output clock signals corresponding to the input readout mode.

In the present description, it is assumed that a command for readout in the high image quality mode has been input. Therefore, the driver closes the high image quality mode switch 243 of each of the I-V converting amplifiers 231, and causes the clock to output a clock signal at a frequency of 0.5 kHz.

The linear motor moves the light source the distance of one pixel in the sub-scanning direction per each received drive pulse, to scan the entire surface of the detector 210 (4300 pixels) in 8.6 seconds.

When the above-described scanning is performed, positive-negative charge pairs are generated within the readout light photoconductive layer 214. Of the charge pairs, positive charges are drawn toward the negative charges (charges having the latent image polarity) accumulated at the charge accumulating portion 217. The positive charges move at high speed through the charge transport layer 213, are coupled with the charges having the latent image polarity at the charge accumulating portion 217, and disappear. Meanwhile, the negative charges generated in the readout light photoconductive layer 214 couple with positive charges supplied to the second conductive layer 215, and disappear. In this manner, the negative charges accumulated in the detector 210 disappear by charge coupling, and electric current is generated within the detector 210 due to the movement of charges during the charge coupling.

The electric current is detected by the I-V converting amplifiers 231 connected to each of the elements 216a in parallel (simultaneously), and is output to the analog multiplexer 251.

The analog multiplexer 251 sequentially outputs the signals input thereto from each of the I-V converting amplifiers 231 in the order that the elements 216a are arranged, every time that a line clock pulse is received. The signals output from the analog multiplexer 251 are sampled by the A/D converter 252 and converted to digital signals, thereby obtaining an image signal corresponding to a pixel in the sub-scanning direction. Image signals for the entire surface (4300 pixels) of the detector 210 are obtained in 8.6 seconds.

The electric current that flows within the detector 210 accompanying the scanning by the readout light corresponds to the charges having the latent image polarity, that is, the electrostatic latent image. Therefore, the image signals obtained by detecting the electric current represent the electrostatic latent image. Thus, the electrostatic latent image is read out.

According to the image readout apparatus having the construction described above, selective utilization of the high speed readout mode, the normal mode, and the high image quality mode is enabled. In addition, the S/N ratio of the detected signals is optimized for each mode, thereby enabling obtainment of the best image quality therefor.

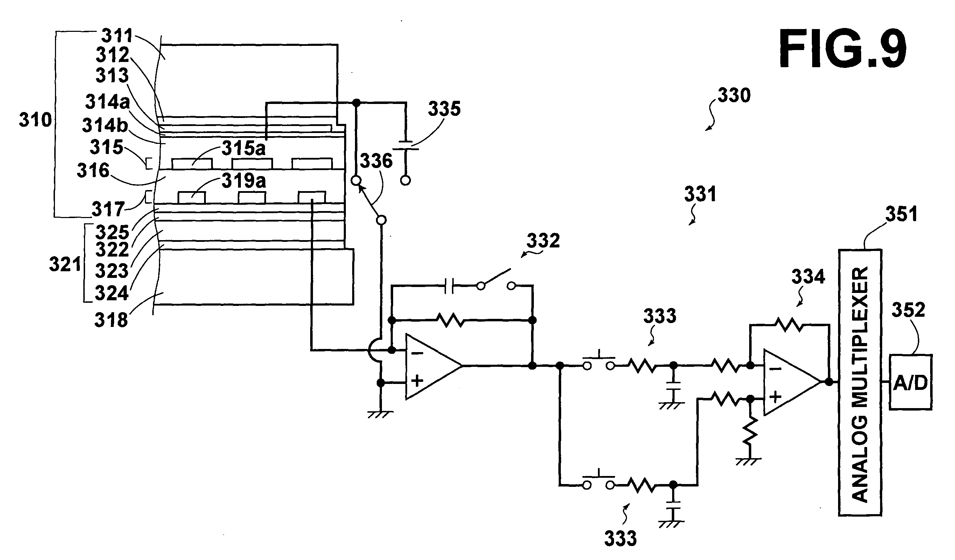

Next, an image readout apparatus according to a fourth embodiment of the present invention will be described. The image readout apparatus of the fourth embodiment differs from that of the third embodiment mainly in that the solid state detector, the readout light scanning means, and the current detecting means have been changed. Figure 9 is a schematic view of a solid state detector, a current detecting means, and an image signal obtaining means of the image readout apparatus of the fourth embodiment. Note that a block diagram of the image readout apparatus according to the fourth embodiment is omitted, because it is the same as that of the third embodiment. In addition, the reference numerals for each component in Figure 9 are those of the components in the third embodiment, with 100 added thereto.

The solid state detector 310 (hereinafter, referred to as "detector") of the present embodiment records image data as an electrostatic latent image, and generates electric current according to the electrostatic latent image when scanned with readout light. The detector 310 comprises: a scintillator 311 for converting radiation irradiated thereon to a visible light having a wavelength of 550nm, that is, recording light; a protective layer 312; a first conductive layer 313, which is transmissive with respect to recording light; a recording light photoconductive layer 314 which generates charges when irradiated with the recording light and exhibits conductivity; a charge accumulating layer 315; a readout light photoconductive layer 316 which generates charges when irradiated with the readout light and exhibits conductivity; and a second conductive layer 317, which is transmissive with respect to the readout light, stacked in the order listed. Gd₂O₂S having a thickness of 220µm is employed as the scintillator 311; IZO having a thickness of 0.1µm is employed as the first conductive layer 313; an organic photoconductor (OPC) having a thickness of 3µm and constituted by a charge generating layer (CGL) 314a and a charge transport layer (CTL) 314b is employed as the recording light photoconductive layer 112; a plurality of Al patches 315a having a thickness of 0.1µm and arranged corresponding to each pixel is employed as the charge accumulating layer 315; and a-Si having a thickness of 3µm is employed as the readout light photoconductive layer 316. A great number of linear electrodes (the hatched portion in the figure) formed by IZO (Indium Zinc Oxide) having a thickness of 0.2µm and a width of 50µm, arranged in stripes at a pitch of 100µm, are employed as the second conductive layer 317, which functions as a readout electrode layer. Hereinafter, the electrodes of the second conductive layer 317 will be referred to as stripe electrodes 317, and each linear electrode will be referred to as element 317a. The detectable region of the detector 310 is set to be 430mm x 430mm. The size of a pixel is set to be 100µm in both a main scanning direction (the arrangement direction of the elements 319a) and a sub-scanning direction (the longitudinal direction of the elements 319a). That is, the detectable region is set to be 4300 pixels x 4300 pixels.

A readout light scanning means 320 comprises a planar light source 321 and driver for controlling the planar light source 321.

The planar light source 321 is an electroluminescent (EL) light source comprising a conductive layer 322, an EL layer 323, and a conductive layer 324. The EL layer 323 may be formed of either an organic EL material or an inorganic EL material. An insulative layer 325 is provided between the stripe electrodes 317 of the detector 310 and the conductive layer 322. The conductive layer 322 comprises a great number of elements 322a (the hatched portions in the figure) which are arranged in stripes at a pitch of 100µm. Each of the elements 322a are arranged to intersect each of the elements 319a of the stripe electrodes 317 of the detector 310. Thereby, a great number of linear light sources constituted by the elements 322a are configured to be arranged in a plane. Each of the elements 322a is connected to the driver.

The driver applies a predetermined voltage between the elements 322a and the conductive layer 324 which faces them. During readout, voltages are applied to each element 322a individually. For example, when predetermined DC voltages are sequentially applied between each of the elements 322a and the conductive layer 324, EL light is emitted from the EL layer sandwiched between the respective element 322a and the conductive layer 324. The EL light which is transmitted through the element 322a is utilized as a linear readout light (hereinafter, referred to as "linear light"). That is, the planar light source 321 is equivalent to a light source wherein a great number of micro linear light sources are arranged in a plane. By sequentially switching the elements 322a, thereby causing EL luminescence from one end of the longitudinal direction of the stripe electrodes 317 to the other end thereof, the entire surface of the stripe electrodes 317 is electrically scanned with linear light. Note that the longitudinal direction of the elements 319a corresponds to the sub-scanning direction, and the direction in which the linear light extends corresponds to the main scanning direction.

The detector 110 and the planar light source 321 are stacked in the order listed on a glass substrate 318.

A current detecting means 330 comprises: a plurality of current detecting amplifiers 331, each of which are connected to each of the elements 319a; a high voltage power source 335, for applying voltage to the detector 310 during image recording; and a switch 336. Each current detecting amplifier 331 comprises: a charge amplifier 332; a two-channel sampling and holding circuit 333; and a differential amplifier. The current detecting amplifiers 331 are configured to perform correlated double sampling processes.

The correlated double sampling process comprises the steps of: detecting an electric signal output by the charge amplifier 332 immediately after it switches to a charge accumulating mode and an electric signal output by the charge amplifier 332 immediately before it switches to a reset mode, with the two-channel sampling and holding circuit 333; and setting the difference between outputs from the sampling and holding circuit 333 as a signal component, with the differential amplifier 334. The correlated double sampling process avoids the influence of offset, called "charge feedthrough" which occurs at the charge amplifier 332.

The current detecting means 330 is also equipped with an internal frequency band changing means 340 (not shown). The frequency band changing means 340 comprises a high speed readout low pass filter, a normal mode low pass filter, and a high image quality low pass filter. Note that the cutoff frequency of each of the low pass filters is set to be half the sampling rate (the Nyquist frequency) of the high speed readout mode, the normal mode, and the high image quality mode.

The image readout apparatus according to the fourth embodiment described above is also capable of obtaining the same advantageous effects as that of the third embodiment.

The preferred embodiments of the image readout apparatus according to the present invention have been described above. However, the solid state detector utilized in the present invention is not limited to those described in the above embodiments. For example, optical readout type solid state detectors as disclosed in the aforementioned U.S. Patent No. 6,268,614 and Japanese Unexamined Patent Publication No. 2000-284056 comprising: a first conductive layer; a recording light photoconductive layer; a readout light photoconductive layer; and a second conductive layer, stacked in this order, wherein a charge accumulating portion is formed at an interface between the recording light conductive layer and the charge transport layer may be utilized. Positive type solid state detectors further comprising other layers (trap layers, insulative layers and the like) or micro conductive members (micro-plates) to form a charge accumulating portion may also be utilized.

## Claims

1. An image readout method comprising the steps of:
scanning a solid state detector comprising: a first conductive layer; at least one photoconductive layer; and a second electrode layer having stripe electrodes formed by a plurality of linear electrodes, stacked in the order listed, which records image data as an electrostatic latent image when irradiated with recording light bearing the image data, and generates electric current corresponding to the electrostatic latent image when scanned with readout light, with the readout light;
detecting the electric current output from the linear electrodes by the scanning; and
obtaining an image signal by sampling the detected electric current at a predetermined sampling rate; wherein
a pixel density of an image formed by the image signal, in the longitudinal direction of the linear electrodes, is changed by changing the scanning speed of the readout light and/or the sampling rate.

2. An image readout method as defined in claim 1, wherein:
a beam width of the readout light, in the longitudinal direction of the linear electrodes, is changed according to the pixel density in the longitudinal direction of the linear electrodes.

3. An image readout method as defined in claim 1, wherein:
a pixel density of the image, in a direction perpendicular to the longitudinal direction of the linear electrodes, is changed by adding the electric current detected for each of the linear electrodes in an analog manner, according to the pixel density in the longitudinal direction of the linear electrodes.

4. An image readout method as defined in claim 2, wherein:
a pixel density of the image, in a direction perpendicular to the longitudinal direction of the linear electrodes, is changed by adding the electric current detected for each of the linear electrodes in an analog manner, according to the pixel density in the longitudinal direction of the linear electrodes.

5. An image readout method comprising the steps of:
scanning a solid state detector comprising: a first conductive layer which is transmissive with respect to recording light; a recording light photoconductive layer which exhibits photoconductivity when irradiated with the recording light; a charge accumulating layer that stores image data borne by the recording light as an electrostatic latent image; a readout light photoconductive layer formed from an amorphous substance which exhibits photoconductivity when irradiated with readout light; and a second conductive layer having stripe electrodes formed by a plurality of linear electrodes, stacked in the order listed, which generates electric current corresponding to the electrostatic latent image when scanned with the readout light, with the readout light;
detecting the electric current output from each of the linear electrodes with a current detecting means; and
obtaining an image signal by sampling the electric current, detected by the current detecting means, at a predetermined sampling rate; wherein
a frequency band of the current detecting means is changed according to a readout speed of the electrostatic latent image, in the case that the readout speed is changed by changing a scanning speed of the readout light and the sampling rate in proportion with each other.

6. An image readout apparatus comprising:
a solid state detector comprising: a first conductive layer; at least one photoconductive layer; and a second electrode layer having stripe electrodes formed by a plurality of linear electrodes, stacked in the order listed, which records image data as an electrostatic latent image when irradiated with recording light bearing the image data, and generates electric current corresponding to the electrostatic latent image when scanned with readout light, with the readout light;
a readout light scanning means for scanning the solid state detector with the readout light;
a current detecting means for detecting the electric current output from each of the linear electrodes by the scanning with the readout light;
an image signal obtaining means for obtaining an image signal by sampling the detected electric current at a predetermined sampling rate; and
a pixel density changing means for changing a pixel density of an image formed by the image signal, in the longitudinal direction of the linear electrodes, by changing the scanning speed of the readout light and/or the sampling rate.

7. An image readout apparatus as defined in claim 6, further comprising:
a beam width changing means for changing a beam width of the readout light in the longitudinal direction of the linear electrodes.

8. An image readout apparatus as defined in claim 6, further comprising:
an adding means for adding the electric current detected from each of the linear electrodes in an analog manner.

9. An image readout apparatus as defined in claim 7, further comprising:
an adding means for adding the electric current detected from each of the linear electrodes in an analog manner.

10. An image readout apparatus comprising:
a solid state detector comprising: a first conductive layer which is transmissive with respect to recording light; a recording light photoconductive layer which exhibits photoconductivity when irradiated with the recording light; a charge accumulating layer that stores image data borne by the recording light as an electrostatic latent image; a readout light photoconductive layer formed from an amorphous substance which exhibits photoconductivity when irradiated with readout light; and a second conductive layer having stripe electrodes formed by a plurality of linear electrodes, stacked in the order listed, which generates electric current corresponding to the electrostatic latent image when scanned with the readout light, with the readout light;
a readout light scanning means for scanning the solid state detector with the readout light;
a current detecting means for detecting the electric current output from each of the linear electrodes by the scanning with the readout light;
an image signal obtaining means for obtaining an image signal by sampling the electric current, detected by the current detecting means, at a predetermined sampling rate; and
a readout speed changing means for changing the readout speed of the electrostatic latent image by changing the scanning speed of the readout light scanning means and the sampling rate in proportion with each other.

11. An image readout apparatus as defined in claim 10, further comprising:
a frequency band changing means for changing a frequency band of the current detecting means.
